# EUROPEAN PATENT SPECIFICATION

(11) **EP 0 462 564 B1**
(45) Date of publication and mention of the grant of the patent: **18.01.1995**
(21) Application number: 91109958.8
(22) Date of filing: 18.06.1991
(51) Int. Cl.: H02K 49/04

(54) **Eddy current type retarder**
Bremse der Wirbelstrombauart
Ralentisseur du type à courant de Foucault

(30) Priority: 20.06.1990 JP 162196/90
(43) Date of publication of application: 27.12.1991
(73) Proprietor: Isuzu Motors Limited, Shinagawa-ku, Tokyo 140 (JP)
(72) Inventor: Kuwahara, Tohru, Isuzu Motors Ltd. Kawasaki Works, Kawasaki-shi, Kanagawa-ken (JP)
(74) Representative: Niedmers, Ole, Dipl.-Phys.

(56) References cited:
- FR-A- 2 073 021
- GB-A- 579 053
- GB-A- 721 748
- GB-A- 1 284 091

## Description

The present invention relates to an eddy current type retarder.

Such eddy current type retarder is principally mounted on a large vehicle to assist a friction brake, and more particularly to an eddy current type retarder wherein one of a pair of magnet supporting rings having a number of permanent magnets opposed to the inner peripheral surface of a brake drum and whose polarities are alternately different in a peripheral direction is secured to a fixed frame disposed internally of the brake drum, the other of said pair of magnet supporting rings being supported rotatably by the arranging pitch of the permanent magnets, whereby the other magnet supporting ring is normally and reversibly rotated to switch the mode into the state for applying a brake torque to the brake drum or the state for not applying the brake torque thereto.

The present applicant has previously filed an eddy current type retarder under former Japanese Patent Application No. 112026/1990.

In the aforementioned eddy-current type retarder, at the time of non-braking, there is formed, within a cross-section of the fixed frame, a short-circuited magnetic closed circuit between a pair of magnet supporting rings permanent magnets lined up laterally, and a ferromagnetic plate. It is preferable to make the ferromagnetic plate thick and its magnetic resistance small in order to reduce the magnetic flux leaked to the brake drum. However, when the ferromagnetic plate is made to be thick, there occur problems such that the weight of the retarder increases; a gap (a magnetic gap) between the permanent magnets and the inner peripheral surface of the brake drum becomes large; the magnetic field toward the brake drum during braking becomes weak; and dimensions of the permanent magnets and magnet supporting rings encased into the fixed frame are restricted.

In view of the aforementioned problems, an object of the present invention is to provide an eddy current type retarder in which the magnetic field of the permanent magnets affecting on the brake drum during braking is not lessened, and the short-circuited magnetic closed circuit is effectively formed during non-braking, while taking the dimensions of the permanent magnets and ferromagnetic plates with respect to the fixed frame into consideration.

For achieving the aforesaid object, the present invention provides an arrangement wherein an annular fixed frame formed with a hollow portion having a box-shaped section is provided internally of a brake drum, one of a pair of magnet supporting rings is secured to the hollow portion of the fixed frame, said pair of magnet supporting rings having a number of permanent magnets opposed to the inner peripheral surface of the brake drum and whose polarities are alternately different in a peripheral direction, the other of said of magnet supporting rings being supported rotatably by the arranging pitch of the permanent magnets, ferromagnetic plates opposed to the permanent magnets of the pair of magnet supporting rings are embedded into an outer peripheral wall of the fixed frame, each of said ferromagnetic plates having a widthwise central portion thicker than the opposite ends thereof, an outer surface of each of said permanent magnets being parallel with an inner surface of said ferromagnetic plate.

If the ferromagnetic plate (the pole piece) disposed between the brake drum and a pair of magnet supporting rings is thin, a drag torque is generated in the brake drum by the leakage flux reaching the brake drum from the permanent magnets passing through the ferromagnetic plate ring non-braking. Conversely, if the ferromagnetic plate is thick, the spacing between the permanent magnets and the brake drum is widened, and as the result, the magnetic flux density reaching the brake drum during braking is lessened thus reducing the efficiency of the brake torque.

In the present invention, the widthwise central portion of the ferromagnetic plate is made to be thicker while the opposite ends thereof are made to be thinner than those of prior art to thereby avoid an increase in weight and avoid the reduction of the magnetic flux density reaching the brake drum during braking.

The magnetic flux density of the ferromagnetic plate which relays the magnetic line of force from one permanent magnet to the other between the pair of magnet supporting rings during non-braking is densest in the widthwise central portion of the ferromagnetic plate. Since the widthwise central portion of the ferromagnetic plate is thickest corresponding to the aforesaid magnetic flux density, the magnetic resistance is small, the shortcircuited magnetic closed circuit passing through the ferromagnetic plate in the cross-section of the fixed frame or effectively formed, and the leakage flux from the permanent magnets toward the brake drum passing through the ferromagnetic plate is reduced to overcome the drag torque of the brake drum.

The invention will now be described in detail with reference to several examples of embodiments shown in the accompanying diagrammatic drawings, in which:
- Fig. 1 to 6: are respectively side sectional views of a fixed frame in an eddy current type retarder according to the present invention;
- Fig. 7: is a cross-sectional view of the ferromagnetic plate of another embodiment where the brake drum has a cylindrical and a conical surface;
- Fig. 8: is a side sectional view of a conventional eddy current type retarder;
- Fig. 9 and 10: are respectively developed views showing peripheral arrangements of permanent magnets during non braking and during braking; and
- Fig. 11: is a front sectional view taking along the line XI - XI of Fig. 8.

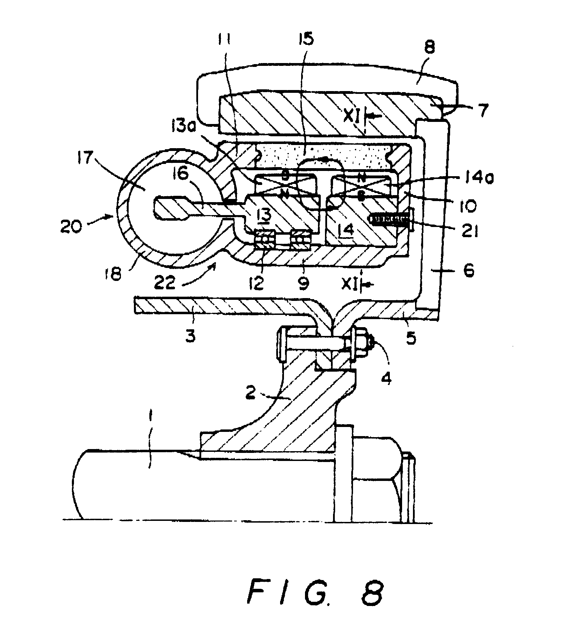

The structure and the function of the eddy current type retarder according to the former Japanese Patent Application No. 112026/1990 will now for better understanding of the invention be described with respect to the embodiment of Fig. 8. In this eddy current type retarder , a boss portion 5 of a brake drum 7 of the eddy current type retarder together with a brake drum 3 of a parking brake are coupled by means of a bolt 4 to a flange 2 coupled to an output rotational shaft 1 of a vehicle transmission. The boss portion 5 is coupled to the right end of the brake drum 7 provided in its outer peripheral surface with a cooling fin 8 by means of a number of radially extending spokes 6. An annular fixed frame (a magnetic shield box) 22 formed of a nonmagnetic material and provided with a hollow portion having a box-shaped section is arranged interiorly of a brake drum 7 formed of an electric conductor.

The fixed frame 22 is secured, for example, to the outer wall of a gear box of the transmission. A pair of magnet supporting rings 13 and 14 formed of a magnetic material are encased in the hollow portion of the fixed frame 22, one of said pair of magnet supporting rings 13 and 14 being secured to the right end wall of the fixed frame 22 by means of a bolt 21 while the other being rotatably supported on the inner peripheral wall 9 of the fixed frame 22 by means of bearings 12. A number of permanent magnets 13 a and 14 a are coupled at peripherally equal pitches to outer peripheral surfaces of the magnet supporting rings 13 and 14. The permanent magnets 13 a and 14 a are arranged so that polarities thereof opposed to the inner peripheral surface of the brake drum 7 are alternately different in a peripheral direction.

Openings are provided, oppositely to the outer surfaces of each pair of permanent magnets 13 a and 14 a, in the outer peripheral wall 11 of the fixed frame 22, and a ferromagnetic plate 15 is fitted into each opening. Actually, the outer peripheral wall 11 of the fixed frame 22 is covered with a low-friction film, and the ferromagnetic plate 15 is configured so that it is embedded into the fixed frame 22.

A hydraulic actuator 20 is provided integral with the left end wall of the fixed frame 22 in order that the magnet supporting ring 13 is rotated by the arranging pitch of the permanent magnet 13 a. The hydraulic actuator 20 is configured so that a piston 17 is fitted into a cylinder 18 extending peripherally of the fixed frame 22, and an arm 16 protruding from the magnet supporting ring 13 through a slit of the left end wall of the fixed frame 22 is connected to a rod extending form the piston 17 outwardly of the cylinder 18.

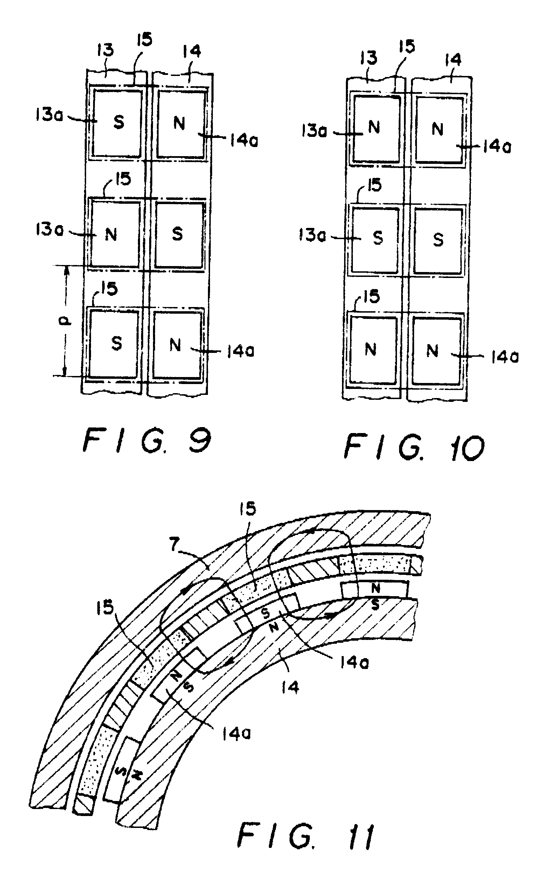

When the vehicle is travelling, the permanent magnet 14 a of the magnet supporting ring 14 is deviated from the permanent magnet 13 a of the magnet supporting ring 13 by the arranging pitch (y) of the permanent magnet as shown in Fig. 9, and the polarities opposed to the ferromagnetic plates 15 are opposite to each other and lined up laterally. As this time, there is formed a shortcircuited magnetic closed circuit composed of N-pole of the permanent magnet 14 a, ferromagnetic plate 15, permanent magnet 13 a, magnet supporting rings 13 and 14, and S-pole of the permanent magnet 14 a in said order as shown by the arrow in Fig. 8. Therefore, the magnetic field vertically acting from the permanent magnets 13 a and 14 a toward the inner peripheral surface of the brake drum 7 becomes so weak that the brake torque is not applied to the brake drum 7.

When the magnetic supporting ring 13 is rotated by the arranging pitch of the permanent magnet by the hydraulic actuator 20 when the vehicle is braked, the permanent magnet 13 a of the magnet supporting ring 13 and the permanent magnet 14 a of the magnet supporting ring 14 are the same in their polarities which are lined up laterally, as shown in Fig. 10. Accordingly, as shown in Fig. 11, there is formed a magnetic closed circuit composed of N-pole of the permanent magnet 14 a, ferromagnetic plate 15, brake drum 7, adjacent ferromagnetic plate 15, adjacent permanent magnet 14 a, magnet supporting ring 14 and S-pole of the permanent magnet 14 a in said order. The same is true for the permanent magnet 13 a. When the brake drum rotates across the magnetic field vertically acting from the permanent magnets 13 a and 14 a to the inner peripheral surface of the brake drum 7 via the common ferromagnetic plate 14, an eddy current is generated in the brake drum 7, which then receives the brake torque.

In the aforementioned eddy-current type retarder, at the time of non-braking, there is formed, within a cross-section of the fixed frame 22, a short-circuited magnetic closed circuit between of a pair of magnet supporting rings 13, 14, permanent magnets 13 a, 14 a lined up laterally, and a ferromagnetic plate 15. It is preferable to make the ferromagnetic plate (15) thick and its magnetic resistance small in order to reduce the magnetic flux leaked to the brake drum 7. However, when the ferromagnetic plate 15 is made to be thick, in its cross-section, there occur problems such that the weight of the retarder increases; a gap (a magnetic gap) between the permanent magnets 13 a, 14 a and the inner peripheral surface of the brake drum 7 becomes large; the magnetic field toward the brake drum 7 during braking becomes weak; and dimensions of the permanent magnets 13 a, 14 a and magnet supporting rings 13, 14 encased into the fixed frame 22 are restricted.

In the invention in an annular fixed frame 22 disposed internally of a brake drum not shown, annular end walls 10 are connected to form box-shaped hollow portions on both sides of an inner peripheral wall 9 and an outer peripheral wall 11 both of which are formed of a non-magnetic material, and a magnet supporting ring 13 for supporting a permanent magnet 13 a and a magnet 14 a are encased in the hollow portion. The magnet supporting ring 13 is supported rotatably by the arranging pitch of the permanent magnets on the inner peripheral wall 9 by means of bearings 12, whereas the magnet supporting ring 14 is fitted in the inner peripheral wall 9 and secured to the right end wall 10 by means of bolts 21. A number of permanent magnets 13 a are connected at peripherally equal pitches to the outer peripheral surface of the magnet supporting ring 13. A number of permanent magnets 14 a are likewise connected at the same pitch to the outer peripheral surface of the magnet supporting ring 14. The permanent magnets 13 a and 14 a have inner surfaces in contact with the magnet supporting rings 13 and 14 and outer surfaces opposed to the ferromagnetic plates 15, said inner surfaces and said outer surfaces comprising magnetic poles, and they are arranged so that the polarities of the outer surfaces are alternately different in the peripheral direction. The ferromagnetic plates 15 are fitted in and supported on openings 23 of the outer peripheral wall 11 formed of a non-magnetic material and arranged magnets 13 a and 14 a.

According to the present invention, with respect to the cross- sectional shape of each ferromagnetic plate 15, the outer surface thereof is parallel with an axis of the brake drum, and the inner surface thereof is thickest in the widthwise (axial) central portion and the opposite ends are thin.

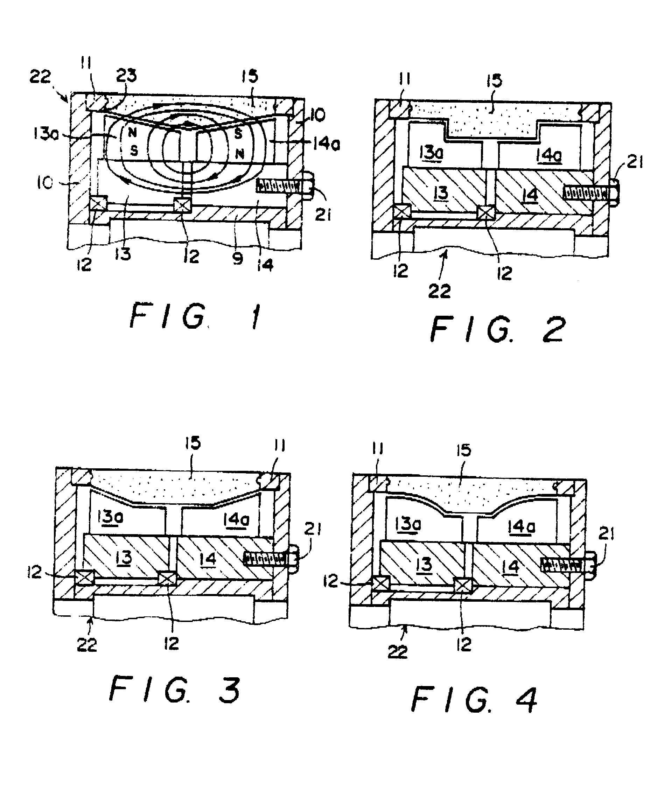

In the embodiment shown in Fig. 1, the cross-sectional central portion of the ferromagnetic plate 15 is protruded in the shape of V toward the inner surface, and the outer surfaces of the permanent magnets 13 a and 14 a are formed into V-shaped grooves corresponding to the inner surface of the ferromagnetic plates 15. Other configurations of the fixed frame and the magnet supporting rings are similar to those of prior art example shown in Fig. 8.

According to the present invention, when the magnet supporting ring 13 is rotated by the arranging pitch of the permanent magnet 14 a to reverse the polarities of the permanent magnets 13 a and 14 a lined up widthwise as shown in Fig. 1, the short-circuited magnetic closed circuit composed of the permanent magnet 13 a, ferromagnetic plate 15, permanent magnet 14 a, magnet supporting ring 14 and magnet supporting ring 13 as shown by the arrow is formed. Since the ferromagnetic plate 15 is thick in the widthwise central portion thereof which is densest in magnetic flux density, the magnetic resistance of the ferromagnetic plate 15 is small, and accordingly, there disappears the leakage flux from the permanent magnets 13 a and 14 a toward the inner peripheral surface of the brake drum passing through the ferromagnetic plate 15 to overcome the drag torque of the brake drum. Since the opposite ends of the ferromagnetic plate 15 are thin, an increase in weight of the ferromagnetic plate 15 is avoided.

In the embodiment shown in Fig. 2, the cross-sectional central portion of the ferromagnetic plate 15 is protruded in the shape of rectangle toward the inner surface, and the cross-sections of the permanent magnets 13 a and 14 a are in the shape of L corresponding to the inner surface of the ferromagnetic plate 15.

In the embodiment shown in Fig. 3, the inner surface of the ferromagnetic plate 15 is parallel with the axis of the brake drum so that the cross-sectional central portion of the ferromagnetic plate 15 is thickest, and the inner surface is inclined with respect to the axis so that the opposite ends become gradually thin. In other words, the inner surface of the outer peripheral wall 11 including the ferromagnetic plate 15 is such that the axial central portion is formed into a cylindrical surface and the opposite ends are formed into conical surfaces.

In the embodiment shown in Fig. 4, the inner surface of the outer peripheral wall 11 including the ferromagnetic plate 15 is different from the embodiment of Fig. 3 in that the opposite ends are not conical surfaces but parabolic surfaces.

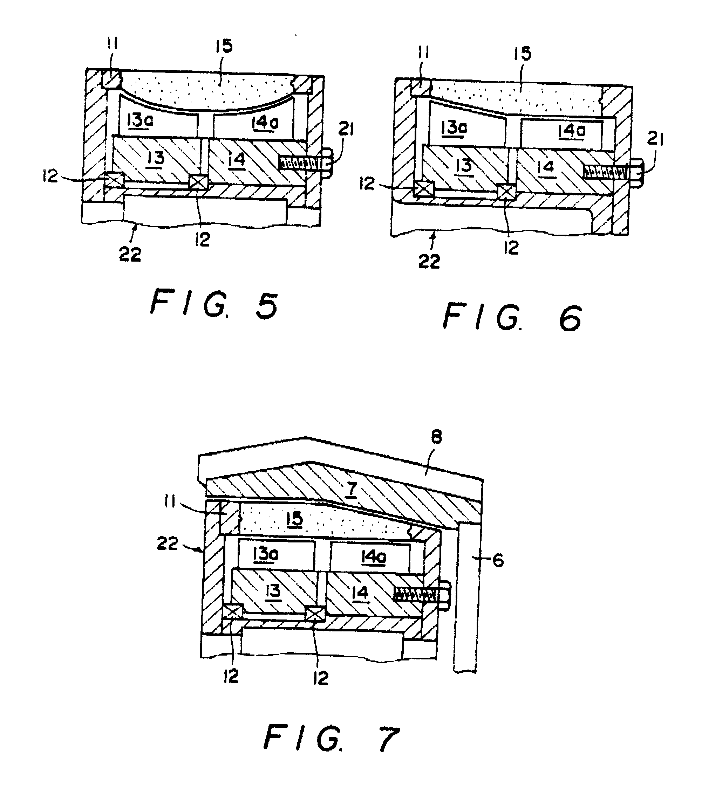

In the embodiment shown in Fig. 5, the cross-section of the ferromagnetic plate 15 is thickest in the widthwise central portion, and portions toward the opposite ends become thin in a curved manner. That is, the inner surface of the outer peripheral wall 11 including the ferromagnetic plate 15 is in the shape of a barrel.

In the embodiment shown in Fig. 6, the cross-section of the ferromagnetic plate 15 is such that the inner surface of the right half is parallel with the axis of the brake drum, and the inner surface of the left half is inclined with respect to the axis so that it becomes thin toward the end edge.

In the embodiment shown in Fig. 7, the cross-section of the ferromagnetic plate 15 is such that the inner surface is parallel with the axis of the brake drum, the left half of the outer surface is parallel with the axis, and the right half of the outer surface is inclined with respect to the axis. Corresponding to the sectional shape of the outer peripheral wall 11 including the ferromagnetic plate 15, the brake drum 7 is such that the left half has a cylindrical surface and the right half has a conical surface. With respect to the wall-thickness of the brake drum 7, its axial central portion is thick.

As mentioned above, the present invention provides an arrangement wherein an annular fixed frame formed with a hollow portion having a box-shaped section is provided internally of a brake drum, one of a pair of magnet supporting rings is secured to the hollow portion of the fixed frame , said pair of magnet supporting rings having a number of permanent magnets opposed to the inner peripheral surface of the brake drum and whose polarities are alternately different in a peripheral direction, the other of said of magnet supporting rings being supported rotatably by the arranging pitch of the permanent magnets, ferromagnetic plates opposed to the permanent magnets of the pair of magnet supporting rings are embedded into an outer peripheral wall of the fixed frame, each of said ferromagnetic plates has a widthwise central portion thicker than the opposite ends thereof, an outer surface of each of said permanent magnets being parallel with an inner surface of said ferromagnetic plate.

The ferromagnetic plate formed with the short-circuited magnetic closed circuit composed of the permanent magnets mutually laterally lined up of the pair of magnet supporting rings during non-braking is thick in the widthwise central portion thereof corresponding to the magnetic flux density. Therefore, the effective short-circuited magnetic closed circuit during non-braking is formed without extremely increasing the weight of the ferromagnetic plate, and the leakage flux toward the brake drum passing through the ferromagnetic plate is reduced to overcome the drag torque of the brake drum.

While the opposite ends of the ferromagnetic plate are thin, the magnetic flux from the permanent magnets toward the brake drum ring braking is fully secured since the gap between the permanent and the brake drum is narrow.

### List of reference numbers

- p: pitch
- 1: rotational shaft
- 2: flange
- 3: brake drum
- 4: bolt
- 5: boss portion
- 6: spoke
- 7: brake drum
- 8: cooling fin
- 9: inner peripheral wall
- 10: end wall
- 11: outer peripheral wall
- 12: bearing
- 13: magnet supporting ring
- 13a: permanent magnet
- 14: magnet supporting ring
- 14a: permanent magnet
- 15: ferromagnetic plate
- 16: arm
- 17: piston
- 18: cylinder
- 20: hydarulic actuater
- 21: bolt
- 22: fixed frame
- 23: opening

## Claims

1. An eddy current type retarder comprising: an annular fixed frame (22) disposed inside a brake drum (7) and having a hollow portion of a box-shaped section; a pair of magnet supporting rings (13, 14) disposed in the hollow portion of said fixed frame (22), one of said magnet supporting rings (14) being mounted with said fixed frame (22), the other of said magnet supporting rings (13) being supported rotatably by the arranging pitch of the permanent magnets (13 a); a number of permanent magnets (13 a, 14 a) provided on said magnet supporting rings (13, 14) so as to be opposed to the inner peripheral surface of the brake drum (7), the polarity of each permanent magnets (13 a, 14 a) being alternately different in a peripheral direction; and a number of ferromagnetic plates (15) embedded into the outer peripheral wall of said fixed frame (22) so as to be opposed to said permanent magnets (13 a, 14 a) of said magnet supporting rings (13, 14); characterised in that each of said ferromagnetic plates (15) has a widthwise central portion thicker than the opposite ends thereof ; and each of said permanent magnets (13 a, 14 a) have the outer surface parallel with the inner surface of said ferromagnetic plate (15).

2. An eddy current type retarder according to claim 1, characterised in that the cross-sectional central portion of the ferromagnetic plate (15) is protruded in the shape of V toward the inner surface, and the outer surfaces of the permanent magnets (13 a) and (14 a) are formed into V-shaped grooves corresponding to the inner surface of the ferromagnetic plates (15).

3. An eddy current type retarder according to claim 1, characterised in that the cross-sectional central portion of the ferromagnetic plate (15) is protruded in the shape of rectangle toward the inner surface, and the cross-sections of the permanent magnets (13 a and 14 a) are in the shape of L corresponding to the inner surface of the ferromagnetic plate (15).

4. An eddy current type retarder according to claim 1, characterised in that the inner surface of the ferromagnetic plate (15) is parallel with the axis of the brake drum so that the cross-sectional central portion of the ferromagnetic plate (15) is thickest, and the inner surface is inclined with respect to the axis so that the opposite ends become gradually thinner.

5. An eddy current type retarder according to claim 4, characterised in that the inner surface plate (15) at the opposite ends are parabolic surfaces.

6. An eddy current type retarder according to claim 1, characterised in that the cross-section of the ferromagnetic plate (15) is thickest in the widthwise central portion, and portions toward the opposite ends become thinner in a curved manner.

7. An eddy current type retarder according to claim 6, characterised in that inner surface of the outer peripheral wall (11) including the ferromagnetic plate (15) is in the shape of a barrel.

8. An eddy current type retarder according to claim 1, characterised in that the cross-section of the ferromagnetic plate (15) is such that the inner surface of the right half is parallel with the axis of the brake drum, and the inner surface of the left half is inclined with respect to the axis so that the ferromagnetic plate (15) becomes thinner toward the end edge.

9. An eddy current type retarder according to claim 1, characterised in that the cross-section of the ferromagnetic plate (15) is such that the inner surface is parallel with the axis of the brake drum, the left half of the outer surface is parallel with the axis, and the right half of the outer surface is inclined with respect to the axis.

10. An eddy current type retarder according to claim 9, characterised in that corresponding to the sectional shape of the outer peripheral wall (11) including the ferromagnetic plate (15), the brake drum (7) is such that the left half has a cylindrical surface and the right half has a conical surface.

## Patentansprüche

1. Eine Wirbelstrombremse, die aufweist: einen ringförmigen festgelegten Rahmen (22), der innerhalb einer Bremstrommel (7) angeordnet ist und einen hohlen Abschnitt mit einem kastenförmigen Querschnitt hat; ein Paar von Magnettragringen (13, 14), die innerhalb des hohlen Abschnitts des festgelegten Rahmens (22) angeordnet sind, wobei einer dieser Magnettragringe (14) mit dem festgelegten Rahmen (22) verbunden ist und der andere dieser Magnettragringe (13) um eine Anordnungsteilungslänge der Permanentmagneten (13 a) drehbar gelagert ist; eine Anzahl von Permanentmagneten (13 a, 14 a), die auf diesen Magnettragringen (13, 14) vorgesehen sind, so daß sie gegenüber der inneren Umfangsoberfläche der Bremstrommel (7) liegen, wobei die Polarität von jedem Permanentmagneten (13 a, 14 a) sich in Umfangsrichtung abwechselnd ändert; und eine Anzahl von ferromagnetischen Platten (15), die in der äußeren Umfangswandung des festgelegten Rahmens (22) so eingebettet sind, daß sie gegenüber den Permanentmagneten (13 a, 14 a) dieser Magnettragringe (13, 14) liegen; dadurch gekennzeichnet, daß jede dieser ferromagnetischen Platten (15) hinsichtlich ihrer Breite einen zentralen Bereich hat, der dicker als deren gegenüberliegenden Enden ist; und daß jeder dieser Permanentmagneten (13 a, 14 a) eine äußere Oberfläche hat, die parallel zu der inneren Oberfläche dieser ferromagnetischen Platte (15) verläuft.

2. Eine Wirbelstrombremse gemäß Anspruch 1, dadurch gekennzeichnet, daß der Querschnitt des zentralen Bereichs der ferromagnetischen Platte V-förmig in Richtung auf die innere Oberfläche hervorspringt, und daß die äußeren Oberflächen der Permanentmagneten (13 a) und (14 a) in V-förmigen Nuten entsprechend der inneren Oberfläche der ferromagnetischen Platten (15) ausgebildet sind.

3. Eine Wirbelstrombremse gemäß Anspruch 1, dadurch gekennzeichnet, daß der Querschnitt des zentralen Abschnitts der ferromagnetischen Platte (15) in Form eines Rechteckes in Richtung auf die innere Oberfläche hervorspringt und daß die Querschnitte der Permanentmagneten (13 a und 14 a) L-förmig entsprechend der inneren Oberfläche der ferromagnetischen Platte (15) ausgebildet sind.

4. Eine Wirbelstrombremse gemäß Anspruch 1, dadurch gekennzeichnet, daß die innere Oberfläche der ferromagnetischen Platte (15) parallel zu der Achse der Bremstrommel verläuft, so daß der Querschnitt des zentralen Bereichs der ferromagnetischen Platte (15) am dicksten ist, wobei die innere Oberfläche in bezug zu der Achse geneigt ist, so daß die gegenüberliegenden Enden allmählich dünner werden.

5. Eine Wirbelstrombremse gemäß Anspruch 4, dadurch gekennzeichnet, daß die innere Oberfläche der Platte (15) an den gegenüberliegenden Enden parabolische Oberflächen hat.

6. Eine Wirbelstrombremse gemäß Anspruch 1, dadurch gekennzeichnet, daß der Querschnitt der ferromagnetischen Platte hinsichtlich ihrer Breite im zentralen Bereich am dicksten ist und die Abschnitte in Richtung auf die gegenüberliegenden Enden in einer gekrümmten Weise dünner werden.

7. Eine Wirbelstrombremse gemäß Anspruch 6, dadurch gekennzeichnet, daß die innere Oberfläche der äußeren Umfangswandung (11), die die ferromagnetische Platte (15) beinhaltet, in der Form einer Fasses ausgebildet ist.

8. Eine Wirbelstrombremse gemäß Anspruch 1, dadurch gekennzeichnet, daß der Querschnitt der ferromagnetischen Platte (15) so ist, daß die innere Oberfläche der rechten Hälfte parallel zu der Achse der Bremstrommel verläuft und die innere Oberfläche der linken Hälfte in bezug auf die Achse geneigt ist, so daß die ferromagnetische Platte in Richtung auf die Stirnkante dünner wird.

9. Eine Wirbelstrombremse gemäß Anspruch 1, dadurch gekennzeichnet, daß der Querschnitt der ferromagnetischen Platte (15) so ist, daß die inner Oberfläche parallel zu der Achse der Bremstrommel verläuft, die linke Hälfte der äußeren Oberfläche parallel zu der Achse verläuft und die rechte Hälfte der äußeren Oberfläche in bezug auf die Achse geneigt ist.

10. Eine Wirbelstrombremse gemäß Anspruch 9, dadurch gekennzeichnet, daß entsprechend der Querschnittsform der äußeren Umfangswandung (11), die die ferromagnetische Platte (15) beinhaltet, die Bremstrommel (7) so ausgebildet ist, daß die linke Hälfte eine zylindrische Oberfläche hat und die rechte Hälfte eine konische Oberfläche hat.

## Revendications

1. Un ralentisseur de type à courant de Foucault comprenant: un châssis fixe annulaire (22) disposé à l'intérieur d'un tambour de frein (7) et comportant une partie creuse en forme de boîtier; une paire de couronnes porte-aimants (13, 14) disposées dans la partie creuse dudit châssis fixe (22), l'une desdites couronnes porte-aimants (14) étant montée sur ledit châssis fixe (22), l'autre desdites couronnes porte-aimants (13) étant montée à rotation au pas de réglage des aimants permanents (13a); une pluralité d'aimants permanents (13a, 14a) prévue sur lesdites couronnes porte-aimants (13, 14) de manière à être en opposition par rapport à la surface périphérique intérieure du tambour de frein (7), la polarité de chaque aimant permanent (13a, 14a) étant alternativement différente dans la direction périphérique; et une pluralité de plaques ferromagnétiques (15) encastrées dans cloison périphérique extérieure dudit châssis fixe (22), de manière à faire face auxdits aimants permanents (13a, 14a) desdites couronnes porte-aimants (13, 14); caractérisé en ce que chacune desdites plaques ferromagnétiques (15) comporte une partie centrale transversale plus épaisse que les extrémités opposées de celle-ci; et que la surface extérieure de chacun desdits aimants permanents (13a, 14a) est parallèle à la surface intérieure de ladite plaque ferromagnétique (15).

2. Un ralentisseur de type à courant de Foucault selon la revendication 1, caractérisé en ce que la partie centrale, en coupe transversale, de la plaque ferromagnétique (15) fait une saillie en forme de V vers la surface intérieure, et les surfaces extérieures des aimants permanents (13a, 14a) sont pourvues de rainures en forme de V correspondant à la surface intérieure des plaques ferromagnétiques (15).

3. Un ralentisseur de type à courant de Foucault selon la revendication 1, caractérisé en ce que la partie centrale en coupe transversale de la plaque ferromagnétique (15) constitue une saillie en forme de rectangle vers la surface intérieure et que les sections en coupe transversale des aimants permanents (13a, 14a) sont en forme de L, correspondant à la surface intérieure de la plaque ferromagnétique (15).

4. Un ralentisseur de type à courant de Foucault selon la revendication 1, caractérisé en ce que la surface intérieure de la plaque ferromagnétique (15) est parallèle à l'axe du tambour de frein, de sorte que la partie centrale, en coupe transversale, de la plaque ferromagnétique (15) est plus épaisse, et que la surface intérieure est inclinée par rapport à l'axe de manière que les extrémités opposées s'amincissent progressivement.

5. Un ralentisseur de type à courant de Foucault selon la revendication 4, caractérisé en ce que la surface intérieure de la plaque (15) présente, aux extrémités opposées, des surfaces paraboliques.

6. Un ralentisseur de type à courant de Foucault selon la revendication 1, caractérisé en ce que la section, en coupe transversale, de la plaque ferromagnétique (15) est plus épaisse dans la partie centrale transversale et que les parties tournées vers les extrémités opposées sont amincies en forme de courbe.

7. Un ralentisseur de type à courant de Foucault selon la revendication 6, caractérisé en ce que la surface intérieure de la cloison périphérique extérieure (11) comprenant la plaque ferromagnétique (15) est de forme cylindrique.

8. Un ralentisseur de type à courant de Foucault selon la revendication 1, caractérisé en ce que la plaque ferromagnétique (15), en coupe transversale, est agencée de manière que la surface intérieure de la moitié droite soit parallèle à l'axe du tambour de frein et que la surface intérieure de la moitié gauche soit inclinée par rapport à l'axe, de sorte que la plaque ferromagnétique (15) s'amincit en direction du bord d'extrémité.

9. Un ralentisseur de type à courant de Foucault selon la revendication 1, caractérisé en ce que la plaque ferromagnétique (15), en coupe transversale, est agencée de manière que la surface intérieure soit parallèle à l'axe du tambour de frein, la moitié gauche de la surface extérieure étant parallèle à l'axe et la moitié droite de la surface extérieure étant inclinée par rapport à l'axe.

10. Un ralentisseur de type à courant de Foucault selon la revendication 9, caractérisé en ce qu'en correspondance avec la forme en coupe de la cloison périphérique extérieure (11) contenant la plaque ferromagnétique (15), le tambour de frein (7) est agencé de manière que la moitié gauche ait une surface cylindrique et que la moitié droite ait une surface conique.
